# EUROPEAN PATENT APPLICATION

(11) **EP 4 648 186 A1**
(43) Date of publication of application: **12.11.2025**
(21) Application number: 23918984.8
(22) Date of filing: 31.01.2023
(51) Int. Cl.: H01M 50/169, H01M 50/166, H01M 50/176

(54) **BATTERY CELL, BATTERY AND ELECTRIC DEVICE**

(71) Applicant: Contemporary Amperex Technology Co., Limited, Ningde, Fujian 352100 (CN)
(72) Inventor: PENG, Chunyang, Ningde, Fujian 352100 (CN); LIAN, Shiyuan, Ningde, Fujian 352100 (CN); YIN, Zeyuan, Ningde, Fujian 352100 (CN); CHEN, Jianyun, Ningde, Fujian 352100 (CN)
(74) Representative: Ziebig Hengelhaupt Intellectual Property Attorneys Patentanwaltskanzlei PartGmbB
(86) International application number: PCT/CN2023/073965
(87) International publication number: WO 2024/159398

(57) **Abstract**

A battery cell (20), a battery (1100), and an electrical apparatus are disclosed in the present application. The battery cell (20) includes a shell (100) and an end cover (200), where the shell (100) has an opening; the end cover (200) is welded at the opening to form a welding structure (300), the welding structure (300) includes a plurality of first welding seams (310), the first welding seams (310) are arranged corresponding to edge portions (210) of the end cover (200), the plurality of first welding seams (310) are connected to form a closed annular structure to be arranged surrounding the end cover (200); where two adjacent first welding seams (310) are connected at a corresponding corner (220) of the end cover (200) in a laminated manner. The welding structure (300) of the battery cell (20) at the corner (220) of the end cover (200) has a good strength, the welding structure (300) between the shell (100) and the end cover (200) has a good strength, the welding quality is high, and the structural reliability of the battery cell (20) is good.

## Description

### TECHNICAL FIELD

The present application relates to the field of welding technologies, and in particular, to a battery cell, a battery, and an electrical apparatus.

### BACKGROUND

A battery cell includes components such as a shell, an electrode assembly, and an end cover. The end cover is welded to an opening of the shell and encloses to form a closed space together with the shell. The electrode assembly is located in the closed space to perform electrochemical reactions, thereby realizing charging and discharging of the battery. However, a welding structure between the shell and the end cover has a poor strength at a corner of the end cover.

### SUMMARY OF THE INVENTION

An objective of embodiments of the present application lies in providing a battery cell, a battery, and an electrical apparatus, including but not limited to solving the problem of poor strength of a welding structure between a shell and an end cover at the corner of the end cover.

In the embodiments of the present application, technical solutions as follows are used:
In a first aspect, a battery cell is provided, the battery cell includes a shell and an end cover, where the shell has an opening; the end cover is welded at the opening to form a welding structure, the welding structure includes a plurality of first welding seams, the first welding seams are arranged corresponding to edge portions of the end cover, the plurality of first welding seams are connected to form a closed annular structure to be arranged surrounding the end cover; where two adjacent first welding seams are connected at a corresponding corner of the end cover in a laminated manner.

In the battery cell of the embodiments of the present application, two adjacent first welding seams are arranged at the corner of the end cover in a laminated manner, so that the corner of the end cover is welded at least twice, and at least two superimposed welding seams are formed at the corner of the end cover. The superposition of the two welding seams can reduce welding defects at the corner of the end cover, thereby increasing a strength of the welding structure at the corner of the end cover. The strength of the welding structure between the shell and the end cover is good, the welding quality is high, and the structural reliability of the battery cell is good.

In one embodiment, in a width direction of the first welding seams, two adjacent first welding seams partially overlap at the corner of the end cover.

In the battery cell of the embodiment of the present application, the first welding seams partially overlap and cover each other, so that a welding region between the end cover and the shell is large, and the welding reliability is better.

In one embodiment, in two adjacent first welding seams, a start end of one of the first welding seams is connected to a terminal end of the other first welding seam in a laminated manner.

In the battery cell of the embodiments of the present application, the corner of the end cover is used as a welding start position, so that the welding seam material formed by welding may be accumulated in a molten pool at a welding end position, thereby improving the welding quality at the welding end position and improving the welding strength.

In one embodiment, a lowest point of the molten pool of the first welding seam is located inside the end cover.

In the battery cell of the embodiments of the present application, the lowest point of the molten pool of the first welding seam is located inside the end cover, so that the shell will not be burnt through during welding to cause leakage, and a good sealing performance is achieved after the welding between the shell and the end cover, thereby improving the reliability of the battery cell.

In one embodiment, a depth of the molten pool of the welding structure at the corner of the end cover is greater than a depth of the molten pool of the welding structure at another position.

The battery cell of the embodiments of the present application has high welding quality, good strength of the welding structure between the shell and the end cover, and good reliability in use of the battery cell.

In one embodiment, at least one first welding seam includes a first welding seam sub-segment and a second welding seam sub-segment connected to each other, and the first welding seam sub-segment and the second welding seam sub-segment are distributed in a length direction of a corresponding edge portion of the end cover.

In the battery cell of the embodiments of the present application, the first welding seam sub-segment and the second welding seam sub-segment may be welded in two steps to obtain the first welding seam, so that the welding operation of the shell and the end cover is simpler and more convenient.

In one embodiment, the first welding seam sub-segment and the second welding seam sub-segment are connected at end portions relatively close to each other in a laminated manner.

In the battery cell of the embodiments of the present application, the connection between the first welding seam sub-segment and the second welding seam sub-segment is welded at least twice, which can increase the welding strength at the connection between the first welding seam sub-segment and the second welding seam sub-segment, reduce welding defects, and improve the welding quality between the end cover and the shell, thereby improving the reliability in use of the battery cell.

In one embodiment, a length of the first welding seam sub-segment is greater than a lamination length of two adjacent first welding seams, and a length of the second welding seam sub-segment is greater than the lamination length of two adjacent first welding seams.

The battery cell of the embodiments of the present application can reduce the connection between the first welding seam sub-segment and the second welding seam sub-segment at the corner of the end cover, thereby improving the welding strength and welding quality at the corner of the end cover.

In one embodiment, a terminal end of the first welding seam sub-segment is connected to a terminal end of the second welding seam sub-segment in a laminated manner.

The battery cell of the embodiments of the present application can reduce the problem of poor welding such as insufficient molten pool caused by the welding of two adjacent first welding seams ending at the same corner of the end cover. The end cover and the shell both have good welding quality and good welding structure strength at the corner of the end cover.

In one embodiment, in a width direction of the first welding seam sub-segment, end portions of the first welding seam sub-segment and the second welding seam sub-segment that are relatively close to each other are partially connected in a laminated manner.

In the battery cell of the embodiments of the present application, the first welding seam sub-segment and the second welding seam sub-segment partially overlap and cover each other, so that a welding region between the end cover and the shell is large, and the welding reliability is better.

In one embodiment, the welding structure further includes at least one second welding seam, where the second welding seam extends from the terminal end of the first welding seam toward the start end of the first welding seam and covers the first welding seam.

The battery cell of the embodiments of the present application can improve the welding quality and welding structure strength at the corner of the end cover.

In one embodiment, a start end of the second welding seam covers the terminal end of the first welding seam.

In the battery cell of the embodiments of the present application, the welding material at the start end of the second welding seam is capable of being accumulated to fill the molten pool at the terminal end of the first welding seam, thereby further improving the welding quality and welding structure strength at the corner of the end cover.

In one embodiment, in the width direction of the first welding seam, the second welding seam partially covers the first welding seam.

In the battery cell of the embodiments of the present application, the second welding seam and the first welding seam partially overlap and cover each other, so that a welding region between the end cover and the shell is large, and the welding reliability is better.

In one embodiment, at least one pair of oppositely arranged first welding seams is covered by a second welding seam.

In the battery cell of the embodiments of the present application, during welding, two welding heads are used to weld the opposite edge portions of the end cover respectively. After the two welding heads perform welding in the same direction to obtain two first welding seams arranged opposite to each other, they are simultaneously moved in the opposite direction for a distance to obtain a pair of second welding seams. In this way, the two welding heads are simultaneously controlled to move back and forth in the same direction synchronously, and the welding is easy to achieve and it is convenient for processing and manufacturing.

In one embodiment, in two adjacent first welding seams, the terminal end of one first welding seam and the terminal end of the other first welding seam are arranged in a laminated manner, and the terminal end of at least one first welding seam is covered by the start end of the second welding seam.

In the battery cell of the embodiments of the present application, the second welding seam is utilized to fill the molten pool at the corner to overcome the problem of poor welding such as insufficient molten pool, thereby improving the strength of the welding structure and the welding quality.

In one embodiment, the length of the second welding seam is greater than the lamination length of two adjacent first welding seams.

The battery cell of the embodiments of the present application can effectively improve the welding structure strength and the welding quality at the corner of the end cover.

In one embodiment, the length of the first welding seam is greater than the length of the second welding seam.

The battery cell of the embodiments of the present application has a moderate welding length, which is conducive to improving the production efficiency and reducing welding costs.

In one embodiment, the first welding seam includes a first corner segment, a first connecting segment, a second connecting segment, and a second corner segment connected in sequence, the first corner segment and the second corner segment are respectively located at two adjacent corners of the end cover, and the second welding seam covers the second connecting segment and the second corner segment; where the depth of the molten pool of the welding structure on the second corner segment is greater than the depth of the molten pool of the welding structure at the second connecting segment, and the depth of the molten pool of the welding structure at the second connection is greater than the depth of the molten pool of the welding structure at the first connecting segment.

The battery cell of the embodiments of the present application has a deep molten pool and good welding reliability, so that the corner near the end cover also has a good welding strength, which is conducive to improving the welding reliability between the end cover and the shell.

In one embodiment, a lowest point of the molten pool of the second welding seam is located inside the end cover.

In the battery cell of the embodiments of the present application, the shell will not be burnt through during welding to cause leakage, and a good sealing performance is achieved after the welding between the shell and the end cover, thereby improving the reliability in use of the battery cell.

In one embodiment, the welding structure is located on a side surface of the end cover.

In the battery cell of the embodiments of the present application, the welding method is simple, convenient, and easy to implement.

In one embodiment, the corner of the end cover is arc-shaped.

In the battery cell of the embodiments of the present application, the transition of edges of the battery cell may be made smoother, so that the battery cell has better reliability in use, which further facilitates the welding.

In one embodiment, the end cover is constructed to have a protruding portion, and the protruding portion is inserted into the shell from the opening.

The battery cell of the embodiments of the present application enables the end cover to be stably fixed on the shell, thereby improving the subsequent welding accuracy.

In one embodiment, a gap between an outer peripheral wall of the protruding portion and an outer peripheral wall of the end cover is in a range from 0.1 mm to 0.5 mm.

The battery cell of the embodiments of the present application can enable the shell and the end cover to be welded together stably and reliably, and the welding structure has a good strength.

In a second aspect, a battery is provided, including the above battery cell.

The battery of the embodiments of the present application adopts the above battery cell. The welding structure between the shell and the end cover in the battery cell has a good strength, the battery cell has good reliability in use, and the battery has better reliability in use and performance.

In a third aspect, an electrical apparatus is provided, including the above battery.

The electrical apparatus of the embodiments of the present application adopts the above battery, the battery has good reliability in use and performance, and it is also conducive to improving the performance and reliability in use of the electrical apparatus.

### BRIEF DESCRIPTION OF DRAWINGS

In order to explain the technical solution in the embodiments of the present application more clearly, the accompanying drawings needed in the description of the embodiments or demonstration technical descriptions will be briefly introduced below. Obviously, the accompanying drawings in the following description are only some embodiments of the application. For a person of ordinary skill in the art, other drawings can be obtained according to these accompanying drawings without creative work.
FIG. 1 is a schematic structural diagram of a vehicle according to an embodiment of the present application.
FIG. 2 is a schematic structural diagram of a battery according to an embodiment of the present application.
FIG. 3 is a schematic structural diagram of a battery cell from one perspective according to an embodiment of the present application.
FIG. 4 is an exploded schematic structural diagram of a battery cell according to an embodiment of the present application.
FIG. 5 is a schematic structural diagram of a battery cell from another perspective according to an embodiment of the present application.
FIG. 6 is a schematic structural diagram of a welding structure of a battery cell according to an embodiment of the present application.
FIG. 7 is a schematic structural diagram of a welding device for manufacturing the welding structure shown in FIG. 6.
FIG. 8 is a welding flowchart of the welding device shown in FIG. 7 at a first welding station.
FIG. 9 is a welding flowchart of the welding device shown in FIG. 7 at a second welding station.
FIG. 10 is a schematic welding diagram of the welding device shown in FIG. 7 at a first welding station.
FIG. 11 is a partial sectional diagram of a battery cell according to an embodiment of the present application.
FIG. 12 is a partial sectional diagram of a welding structure of a battery cell according to an embodiment of the present application at a first welding seam.
FIG. 13 is a schematic structural diagram of a welding structure of a battery cell according to an embodiment of the present application.
FIG. 14 is a schematic structural diagram of a welding device of a welding structure of a battery cell according to an embodiment of the present application.
FIG. 15 is a welding flowchart of the welding device shown in FIG. 14 at a first welding station.
FIG. 16 is a welding flowchart of the welding device shown in FIG. 14 at a second welding station.
FIG. 17 is a schematic welding diagram of a welding device for manufacturing the welding structure shown in FIG. 13 at a second welding station.
FIG. 18 is a partial enlarged diagram of a part A in FIG. 17.
FIG. 19 is a partial sectional diagram of a welding structure of a battery cell according to an embodiment of the present application at a lamination of a first welding sub-segment and a second welding seam sub-segment.
FIG. 20 is a schematic structural diagram of a welding structure of a battery cell according to an embodiment of the present application.
FIG. 21 is a schematic welding diagram of a welding device for manufacturing the welding structure shown in FIG. 20 at a second welding station.
FIG. 22 is a partial enlarged diagram of a part F in FIG. 17.
FIG. 23 is a partial sectional diagram of a battery cell according to an embodiment of the present application.

Here, the reference numerals in the figures are:
1000. Vehicle; 1100. Battery; 1200. Controller; 1300. Motor; 10. Box; 11. First part; 12. Second part; 20. Battery cell
100. Shell
200. End cover
210. Edge portion; 220. Corner; 230. Protruding portion;
241. Electrode terminal; 242. Pressure relief mechanism;
300. Welding structure;
310. First welding seam; 320. Second welding seam; 330. Molten pool;
3111. First welding seam sub-segment; 3112. Second welding seam sub-segment;
3121. First corner segment; 3122. First connecting segment; 3123. Second connecting segment; 3124. Second corner segment;
3101. Start end; 3102. Terminal end;
400. Welding head;
500. Welding device
510. Assembling station; 520. First welding station; 530. First trimming station; 540. Transfer station; 550. Second welding station; 560. Second trimming station; 570. Conveying mechanism;
600. Electrode assembly.

### DETAILED DESCRIPTION

The embodiments of the present application are described in detail below. Examples of the embodiments are illustrated in the accompanying drawings, where the same or similar labels from beginning to end denote the same or similar components or components having the same or similar functions. The embodiments described below with reference to the accompanying drawings are exemplary and are intended to explain the present application, but should not be construed as limiting the present application.

In the descriptions of the present application, it should be understood that orientations or positional relationships indicated by "length", "width", "upper", "lower", "front", "rear", "left", "right", "vertical", "horizontal", "top", "bottom", "inner", "outer", and the like are orientations or positional relationships as shown in the drawings, and are only for the purpose of facilitating and simplifying the descriptions of the present application instead of indicating or implying that devices or elements indicated must have particular orientations, and be constructed and operated in the particular orientations, so that these terms are not construed as limiting The present application.

In addition, the terms "first" and "second" are used for descriptive purposes only, and cannot be construed as indicating or implying relative importance or implicitly indicating the number of technical features indicated. From this, features defined as "first" and second" may explicitly or implicitly include one or more features. In the description of the present application, "plurality" means two or more, unless otherwise expressly and specifically defined.

In the present application, unless otherwise expressly specified and limited, the terms "mount," "connected," "connect" and "fix" should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or the interaction of two elements. For those of ordinary skill in the art, the specific meanings of the above terms in the present application can be understood according to specific situations.

In the description of the embodiments of the present application, it should be noted that the term "and/or" is simply a description of an association of associated objects, which indicates that there may be three relationships, for example, A and/or B may represent three situations: A exists alone, both A and B exist, and B exists alone.

It should also be noted that, in the embodiments of the present application, the same reference numeral is used to represent the same component or the same part. For the same parts in the embodiments of the present application, the figure may only mark one of the parts or components as an example. It should be understood that the reference numeral is also applicable to other identical parts or components.

In the present application, reference to "an embodiment," "some embodiments," "an example," "a specific example," or "some examples," means that a specific feature, structure, material, or characteristic described in connection with such embodiment or example is included in at least one embodiment or example of the present application. The expression of these terms throughout this specification are not necessarily referring to a same embodiment or example. Moreover, the specific features, structures, materials, or characteristics described may be combined in any one or more embodiments or examples in a suitable manner. Moreover, in a case without mutual contradiction, persons skilled in the art can perform incorporation and combination on different embodiments or examples described in the specification with features of the different embodiments or examples.

In the present application, for the convenience of description, a Z-axis in the accompanying drawings represents an up-down direction, a positive direction of the Z-axis represents up, and a negative direction of the Z-axis represents down; a Y-axis in the accompanying drawings represents a left-right direction, a positive direction of the Y-axis represents left, and a negative direction of the Y-axis represents right; and an X-axis in the accompanying drawings represents a front-back direction, a positive direction of the X-axis represents back, and a negative direction of the X-axis represents front.

At present, from the development of market situation, the application of batteries is becoming increasingly more extensive. Batteries are used in energy storage power source systems such as hydraulic, thermal, wind, and solar power stations, but also widely applied in fields, for example, electric vehicles such as electric bicycles, electric motorcycles, and electric cars, military equipment and aerospace fields, and the like. With continuous expansion of application fields of power batteries, market demands for battery batteries are also expanding.

A battery cell includes components such as a shell, an electrode assembly, and an end cover. The end cover is welded to an opening of the shell and encloses to form a closed space together with the shell. The electrode assembly is located in the closed space to perform electrochemical reactions, thereby realizing charging and discharging of the battery. However, a welding structure between the shell and the end cover has a poor strength.
he applicant found that one of the main reasons for the poor strength of the welding structure between the shell and the end cover is that in a welding process of the shell and the end cover, poor welding is prone to occur at a corner of the end cover, which leads to welding defects and other problems in the welding between the shell and the end cover, thereby causing the poor strength of the welding structure between the shell and the end cover. After increasing a welding power and increasing a depth of the molten pool, there are still problems with the strength of the welding structure between the shell and the end cover. Furthermore, it is found through research that poor welding is prone to occur at the corner of the end cover.

Therefore, in order to improve the welding strength between the shell and the end cover, the applicant has designed a battery cell after in-depth research. At least two welding seams are arranged in a laminated manner at the corner of the end cover between the end cover and the shell in the battery cell. This can increase the welding strength at the corner, improve the welding strength of the battery cell at the corner of the end cover, improve the welding quality of the battery cell, and improve the structural strength of the battery, thereby being conducive to improving the reliability of the battery.

A battery cell, a battery, and an electrical apparatus that uses the battery as a power source are disclosed in embodiments of the present application. The electrical apparatus may be, but is not limited to, a mobile phone, a tablet, a notebook, an electric toy, an electric tool, a battery vehicle, an electric vehicle, a ship, a spacecraft, and the like. The electric toy may include fixed or mobile electric toys, such as a game machine, an electric vehicle toy, an electric ship toy, and an electric airplane toy. The spacecraft may include an airplane, a rocket, a space shuttle, a spaceship, and the like.

For the convenience of description in the following embodiments, an electrical apparatus being a vehicle 1000 according to an embodiment of the present application is taken as an example for the description.

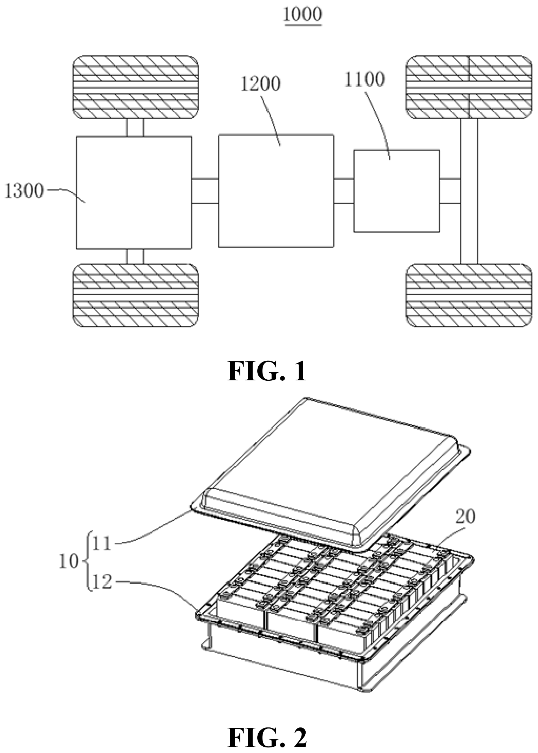

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended-range electric vehicle, or the like. A battery 1100 is arranged in the vehicle 1000. The battery 1100 may be arranged at the bottom, head, or tail of the vehicle 1000. The battery 1100 may be configured to supply power to the vehicle 1000. For example, the battery apparatus 1100 may be used as an operating power source of the vehicle 1000. The vehicle 1000 may further include a controller 1200 and a motor 1300. The controller 1200 is configured to control the battery 1100 to supply power to the motor 1300, for example, for the operating power demand when the vehicle 1000 is starting, navigating, and driving.

In some embodiments of the present application, the battery 1100 may not only be used as an operating power source for the vehicle 1000, but also as a driving power source for the vehicle 1000, to replace or partially replace fuel or natural gas to provide driving power for the vehicle 1000.

Referring to FIG. 2, as an embodiment of the battery 1100, the battery 1100 includes a box 10 and a battery cell 20, where the battery cell 20 is accommodated within the battery box 10. The battery box 10 is configured to provide an accommodating space for the battery cell 20, and the battery box 10 can be of various structures. In some embodiments, the battery box 10 may include a first part 11 and a second part 12, the first part 11 and the second part 12 covering each other, and the first part 11 and the second part 12 together defining the accommodating space for accommodating the battery cell 20. The second part 12 may be of a hollow structure with an opening at one end, and the first part 11 may be of a plate-like structure, where the first part 11 covers the opening side of the second part 12 so that the first part 11 and the second part 12 together define the accommodating space. The first part 11 and the second part 12 may each be of a hollow structure with an opening at one end, where the opening side of the first part 11 covers the opening side of the second part 12. Of course, the battery box 10 formed by the first part 11 and the second part 12 may be of a variety of shapes, such as a cylinder and a cuboid.

In the battery 1100, there may be a plurality of battery cells 20, and the plurality of battery cells 20 may be connected in series, in parallel, or in parallel-series connection, and the parallel-series connection means that the plurality of battery cells 20 are connected in both series and parallel.

In an embodiment, the plurality of battery cells 20 may be directly connected in series, in parallel, or in parallel-series connection, and then the entirety formed by the plurality of battery cells 20 is accommodated in the box 10. Of course, the battery 1100 may also be an entirety formed by connecting the plurality of battery cells 20 in series, in parallel, or in parallel-series connection to form battery modules and then connecting the plurality of battery modules in series, in parallel, or in parallel-series connection, and is then accommodated in the box 10. The battery 1100 may further include other structures. For example, the battery 1100 may further include a bus component for electrically connecting the plurality of battery cells 20.

Each battery cell 20 may be a secondary battery or a primary battery; and may also be a lithium-sulfur battery, a sodium-ion battery, or a magnesium-ion battery, but is not limited thereto. The battery cell 20 may be in a flat shape, a cuboid shape, or in other shapes.

As another embodiment of the battery 1100, the battery 1100 may not include the box 10, but a plurality of battery cells 20 may be electrically connected and formed into a whole through necessary fixing structures and are then assembled into an electrical apparatus.

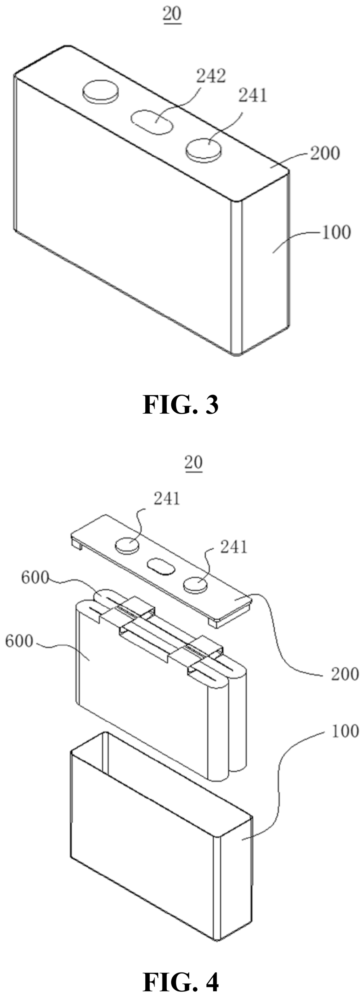

Referring to FIG. 3 and FIG. 4, Fig. 3 is a schematic structural diagram of a battery cell 20 according to some embodiments of the present application, and FIG. 4 is a schematic exploded structural diagram of a battery cell 20 according to some embodiments of the present application. The battery cell 20 refers to the smallest unit constituting a battery. As shown in FIG. 3, the battery cell 20 includes an end cover 200, a shell 100, an electrode assembly 600, and other functional components.

The end cover 200 refers to a component that covers an opening of the shell 100 to isolate the internal environment of the battery cell 20 from the external environment. Without limitation, the shape of the end cover 200 may be adapted to the shape of the shell 100 to fit the shell 100. Optionally, the end cover 200 may be made of a material (such as aluminum alloy) with a certain hardness and strength, and in this way, the end cover 200 is not easily deformed when being subjected to extrusion and collisions, such that the battery cell 20 is capable of having a higher structural strength, and the safety performance can also be improved. A functional component such as the electrode terminal 241 may be arranged on the end cover 200. The electrode terminal 241 can be configured to be electrically connected to the electrode assembly 600, for outputting or inputting electric energy from or into the battery cell 20. In some embodiments, the end cover 200 may be further provided with a pressure relief mechanism 242 for relieving an internal pressure when the internal pressure or temperature of the battery cell 20 reaches a threshold. The end cover 200 may be made of various materials, such as copper, iron, aluminum, stainless steel, aluminum alloy, and plastic, which is not particularly limited in the embodiments of the present application. In some embodiments, an insulating member may be further arranged on an inner side of the end cover 200, and the insulating member may be configured to isolate an electrical connecting component in the shell 100 from the end cover 200, thereby reducing the risk of short circuit. For example, the insulating member may be made of plastic, rubber, and the like.

The shell 100 is an assembly configured to fit the end cover 200 to form the internal environment of the battery cell 20, where the formed internal environment can be used for accommodating the electrode assembly 600, an electrolyte solution, and other components. The shell 100 and the end cover 200 may be separate components, the shell 100 may be provided with an opening, and the internal environment of the battery cell 20 is formed by making the end cover 200 cover the opening at the opening. Without limitation, the end cover 200 and the shell 100 may also be integrated. Specifically, the end cover 200 and the shell 100 may form a common connecting surface before other components enter the shell. When the interior of the shell 100 is required to be encapsulated, the shell 100 is covered by the end cover 200. The shell 100 may be of various shapes and dimensions, such as a cuboid, a cylinder, and a hexagonal prism. Specifically, the shape of the shell 100 may be determined according to the specific shape and dimension of the electrode assembly 600. The shell 100 may be made of various materials, such as copper, iron, aluminum, stainless steel, aluminum alloy, and plastic, which is not particularly limited in the embodiments of the present application.

The electrode assembly 600 is a component of the battery cell 20 where an electrochemical reaction occurs. One or more electrode assemblies 600 may be included within the shell 100. The electrode assembly 600 includes a positive electrode, a negative electrode, and a spacer. In a charging and discharging process of the battery cell 20, active ions (such as lithium ions) are intercalated and de-intercalated between the positive electrode and the negative electrode in a reciprocating manner. The separator is arranged between the positive electrode and the negative electrode, and mainly functions to prevent a short circuit between the positive electrode and the negative electrode while enabling active ions to pass through.

In some embodiments, the positive electrode may be a positive electrode plate, and the positive electrode plate may include a positive electrode current collector and a positive electrode active material arranged on at least one surface of the positive electrode current collector.

In some embodiments, the negative electrode may be a negative electrode plate, and the negative electrode plate may include a negative electrode current collector and a negative electrode active material arranged on at least one surface of the negative electrode current collector.

In some embodiments, the spacer is a separator. The type of the separator is not specifically limited in the present application, and may be any well-known polyporous separator with desirable chemical stability and mechanical stability.

In some embodiments, the electrode assembly 600 is of a wound structure. The positive electrode plate and the negative electrode plate are wound into the wound structure.

In some embodiments, the electrode assembly 600 is of a stacked structure.

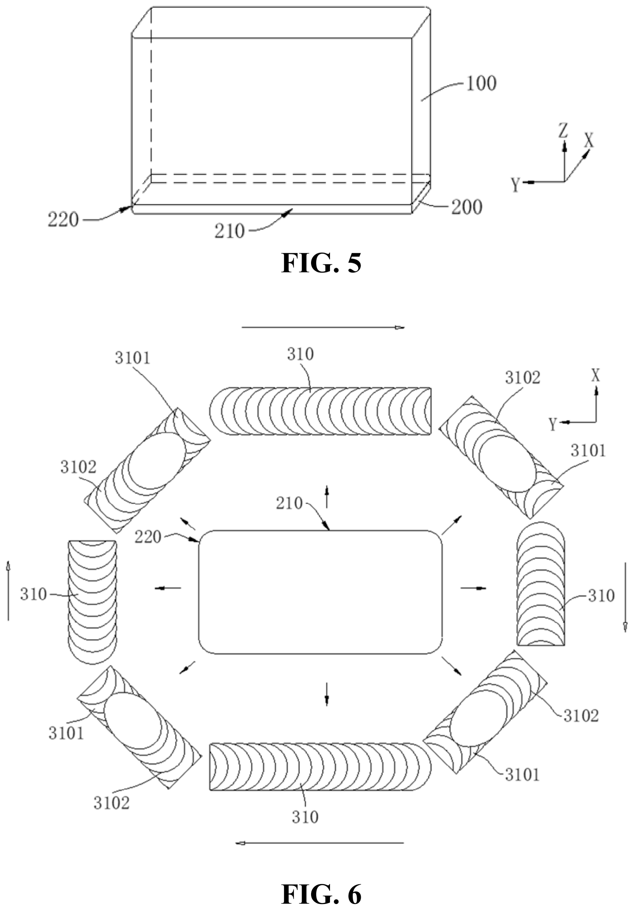

As shown in FIG. 5 and FIG. 6, in an embodiment of the present application, a battery cell 20 is provided, the battery cell 20 includes a shell 100 and an end cover 200, where the shell 100 has an opening; the end cover 200 is welded at the opening to form a welding structure 300, the welding structure 300 includes a plurality of first welding seams 310, the first welding seams 310 are arranged corresponding to edge portions 210 of the end cover 200, the plurality of first welding seams 310 are connected to form a closed annular structure to be arranged surrounding the end cover 200; where two adjacent first welding seams 310 are connected at a corresponding corner 220 of the end cover 200 in a laminated manner.

The end cover 200 refers to a component that covers an opening of the shell 100, for example, the above component that covers the opening of the shell 100 to isolate the internal environment of the battery cell 20 from the external environment. The shape of the end cover 200 is also compatible with the opening shape of the shell 100, and the shape of the end cover 200 may be a polygon such as a triangle, a quadrangle, or a pentagon. For example, as shown in FIG. 5, the end cover 200 is in the shape of a rectangle.

The shell 100 is an outer protective component of the battery cell 20, for example, the above assembly used to cooperate with the end cover 200 to form the internal environment of the battery cell 20.

The end cover 200 is welded at the opening and forms the welding structure 300. It is understandable that the edge portion 210 of the end cover 200 is welded to the edge portion corresponding to the opening of the shell 100, so that the shell 100 and the end cover 200 are connected as a whole, where the welding structure 300 refers to a connecting component formed after the edge portion 210 of the end cover 200 is welded to the edge portion corresponding to the opening of the shell 100.

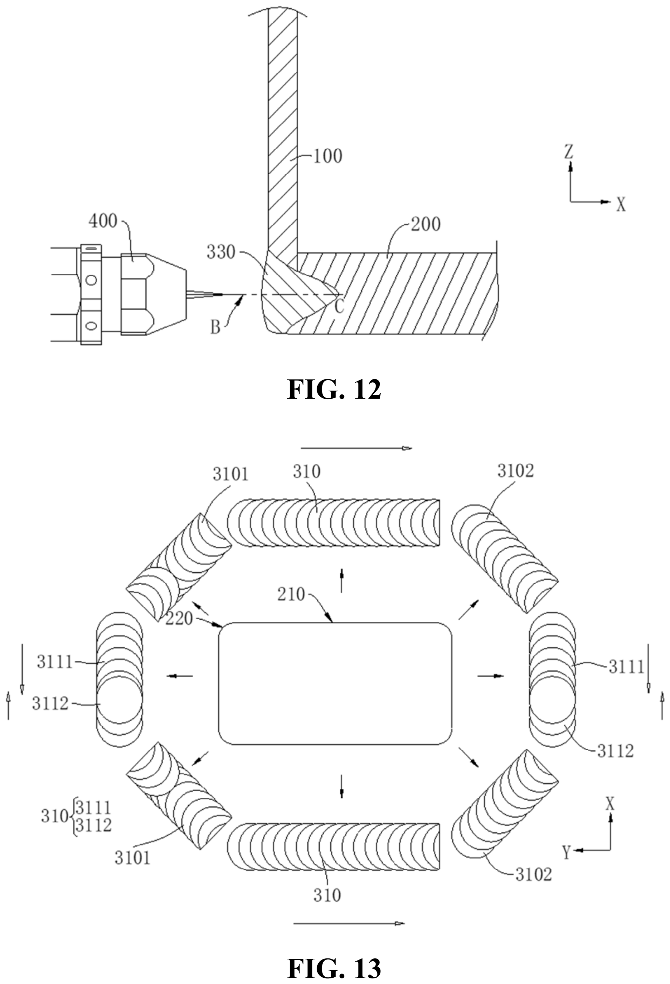

The welding structure 300 includes a plurality of first welding seams 310, and the first welding seams 310 are arranged corresponding to the edge portions 210 of the end cover 200. It is understandable that the first welding seam 310 refers to a welding seam formed after the edge portion 210 of the end cover 200 is welded to the edge portion 210 corresponding to the opening of the shell 100, and the number of the first welding seams 310 is the same as the number of the edge portions 210 of the end cover 200. For example, as shown in FIG. 6 and FIG. 13, the end cover 200 is rectangular, and the four edge portions 210 of the end cover 200 are each provided with a first welding seam 310, that is, the number of the first welding seams 310 is four. The welding structures 300 at the four edge portions 210 of the end cover 200 correspond to the first welding seams 310 located at the front, rear, left, and right sides in the figure respectively. The welding structures 300 at the four corners 220 of the end cover 200 can be obtained with reference to the inclined welding seam structures at the four corners in FIG. 6 and FIG. 13. The specific correspondence may refer to the directions indicated by the solid arrows in the figures in a one-to-one manner. It should be noted that, for the convenience of illustration, the welding structures 300 in FIG. 6 and FIG. 13 are divided into 6 segments, where the start end 3101 and the terminal end 3102 of the first welding seam 310 are disconnected from the first welding seam 310, and are respectively located in two inclined welding seam structures. However, in actual products, the 6 segments of welding structure 300 in the figure are connected end to end in sequence, that is, the start end 3101 and the terminal end 3102 of the first welding seam 310 are connected to the first welding seam 310 together, and the welding structure 300 is formed by four first welding seams 310 connected end to end in a laminated manner, thereby forming an annular welding structure arranged surrounding the end cover 200.

Of course, in another embodiment, the end cover 200 is triangular, and each of the three edge portions 210 of the end cover 200 is provided with a first welding seam 310, that is, the number of the first welding seams 310 is three. Of course, in other embodiments, the end cover 200 may also be a pentagon, a hexagon, or the like.

The plurality of first welding seams 310 are connected to form a closed annular structure to be arranged surrounding the end cover 200. It is understandable that the plurality of first welding seams 310 are connected end to end to form the closed annular structure, which is arranged surrounding the end cover 200, thereby realizing an overall sealed connection between the end cover 200 and the shell 100.

The corner 220 of the end cover 200 refers to a connection of two adjacent edge portions 210 on the end cover 200 (as shown with reference to FIG. 6).

Two adjacent first welding seams 310 are connected in a laminated manner at the corresponding corner 220 of the end cover 200. It is understandable that at the connection between the two adjacent first welding seams 310, one first welding seam 310 covers the other first welding seam 310 to form a welding seam lamination structure, and the welding seam lamination structure is located at the corner 220 of the end cover 200. During welding, when welding one edge portion 210 connected to the corner 220, the corner 220 may be welded to form a layer of welding seam in the welding seam lamination structure, and when the other edge portion 210 connected to the corner 220 is welded, the corner 220 may also be welded to form another layer of welding seam in the welding seam lamination structure. That is to say, the corner 220 of the end cover 200 may be welded at least twice, thereby forming at least two welding seams. It should be noted that all two adjacent first welding seams 310 may be connected in a laminated manner at the corner 220 corresponding to the end cover 200, or some two adjacent first welding seams 310 may be connected in a laminated manner at the corner 220 corresponding to the end cover 200.

In the battery cell 20 of the embodiments of the present application, two adjacent first welding seams 310 are arranged at the corner 220 of the end cover 200 in a laminated manner, so that the corner 220 of the end cover 200 is welded at least twice, and at least two superimposed welding seams are formed at the corner 220 of the end cover 200. The superposition of the two welding seams can reduce welding defects at the corner 220 of the end cover 200, thereby increasing a strength of the welding structure at the corner 220 of the end cover 200. The strength of the welding structure between the shell 100 and the end cover 200 is good, the welding quality is high, and the structural reliability of the battery cell 20 is good.

In another embodiment of the present application, the battery cell 20 is provided such that, in the width direction of the first welding seam 310, two adjacent first welding seams 310 partially overlap at the corner 220 of the end cover 200.

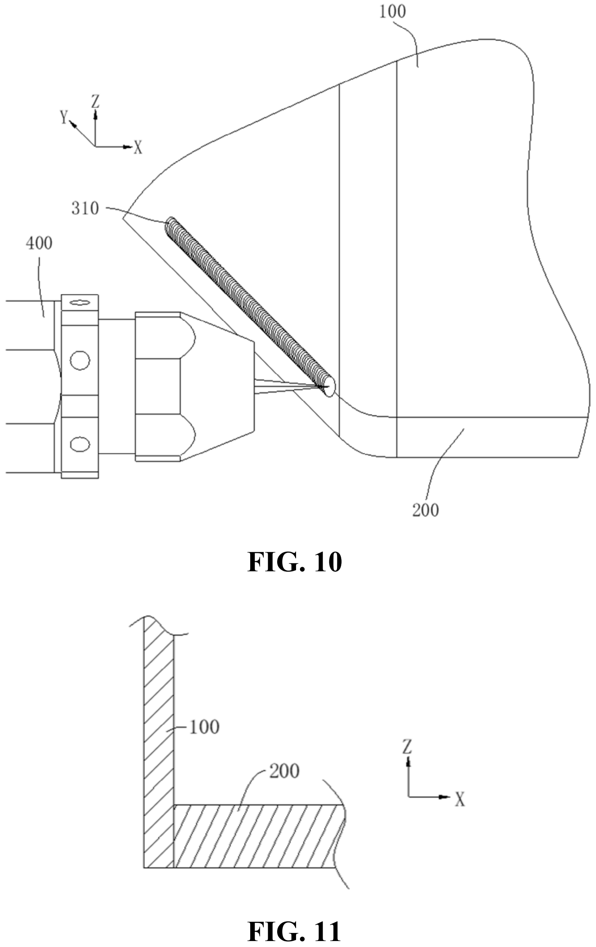

For the width direction of the first welding seam 310, for example, as shown in FIG. 10, the width direction of the first welding seam 310 is the Z direction.

In the width direction of the first welding seam 310, two adjacent first welding seams 310 partially overlap at the corner 220 of the end cover 200. It is understandable that in the welding process, due to processing errors, a center line B of a welding head 400 is not on the same horizontal plane when welding the two adjacent edge portions 210 of the end cover 200, so that center lines of the two adjacent first welding seams 310 formed are also not on the same horizontal plane, and then the two adjacent first welding seams 310 are misaligned vertically, resulting in the two adjacent first welding seams 310 not completely overlapping, but partially overlapping; in addition, for the partial overlapping, a welding region of the end cover 200 and the shell 100 is large, and the welding reliability is better.

In another embodiment of the present application, as shown in FIG. 6, the battery cell 20 is provided, and in two adjacent first welding seams 310, a start end 3101 of one first welding seam 310 is connected to an terminal end 3102 of another first welding seam 310 in a laminated manner.

The start end 3101 of the first welding seam 310 refers to a segment of the welding seam formed at the beginning of welding the edge portion 210 of the end cover 200.

The terminal end 3102 of the first welding seam 310 refers to a segment of the welding seam formed when the welding of the edge portion 210 of the end cover 200 is almost finished.

Referring to FIG. 6 and FIG. 13, in two adjacent first welding seams 310, the start end 3101 of one first welding seam 310 is connected to the terminal end 3102 of the other first welding seam 310 in a laminated manner. It is understandable that at the corner 220 of the end cover 200, the start end 3101 of one first welding seam 310 is connected to the terminal end 3102 of the other first welding seam 310 in a laminated manner, that is, the corner 220 of the end cover 200 is a welding start position of one first welding seam 310 and a welding terminal position of the other first welding seam 310, which can reduce the problem of poor welding such as insufficient molten pool 330 caused by the end of welding of two adjacent first welding seams 310 at the same corner 220 of the end cover 200. In addition, the corner 220 of the end cover 200 is used as the welding start position, so that the welding seam material formed by welding will be accumulated in the molten pool 330 at the welding end position, thereby improving the welding quality at the welding end position and improving the welding strength. It should be noted that all two adjacent first welding seams 310 may be connected in a laminated manner by the start end 3101 and the terminal end 3102 at the corner 220 corresponding to the end cover 200, or some two adjacent first welding seams 310 may be connected in a laminated manner by the start end 3101 and the terminal end 3102 at the corner 220 corresponding to the end cover 200.

In another embodiment of the present application, as shown in FIG. 12, for the provided battery cell 20, a lowest point C of the molten pool 330 of the first welding seam 310 is located inside the end cover 200.

The molten pool 330 refers to a liquid metal portion with a certain geometric shape formed on the shell 100 and the end cover 200 under the action of a welding heat source; where the molten pool 330 may also be a portion formed after the liquid metal portion solidifies.

The lowest point of the molten pool 330 of the first welding seam 310 refers to the lowest point C of the molten pool 330 in its depth direction. For example, as shown in FIG. 12, the depth direction of the molten pool 330 may be the X direction.

In the battery cell 20 of the embodiments of the present application, when welding is performed from a side surface of the end cover 200, the lowest point of the molten pool 330 of the first welding seam 310 is located inside the end cover 200, so that the shell 100 will not be burnt through during welding to cause leakage, and a good sealing performance is achieved after the welding between the shell 100 and the end cover 200, thereby improving the reliability of the battery cell 20.

In another embodiment of the present application, a depth of the molten pool 330 of the welding structure 300 of provided the battery cell 20 at the corner 220 of the end cover 200 is greater than a depth of the molten pool 330 of the welding structure 300 at another position.

In the battery cell 20 of the embodiment of the present application, the depth of the molten pool 330 at the corner 220 of the end cover 200 is greater than the depth of the molten pool 330 at another position. The welding structure 300 at the corner 220 of the end cover 200 has a good reliability and high welding quality. The welding structure between the shell 100 and the end cover 200 is good in strength, and the battery cell 20 has a good reliability in use.

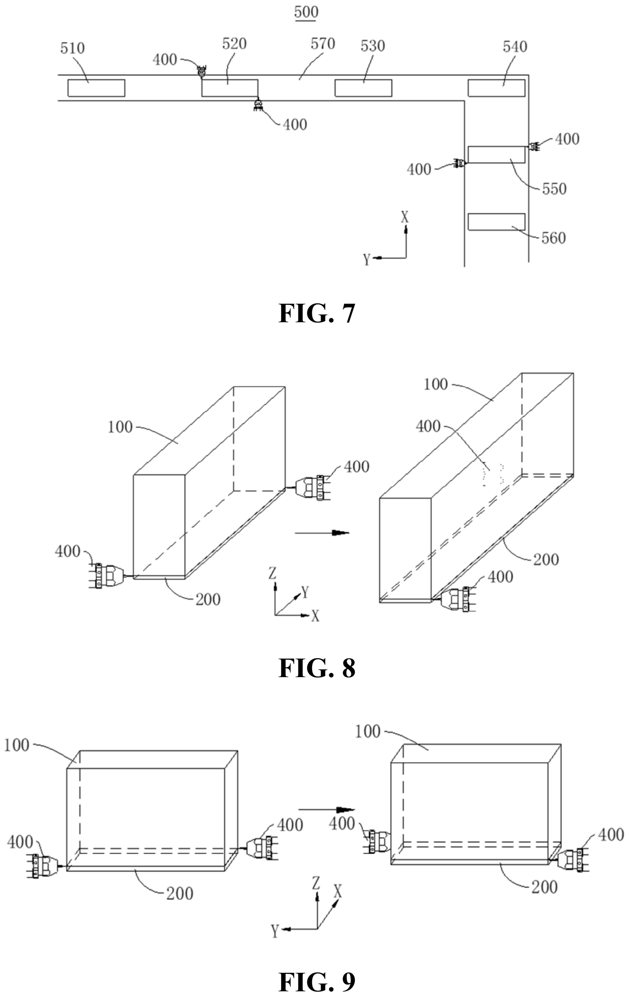

In one embodiment, as shown in FIG. 6 to FIG. 9, the end cover 200 is rectangular, the end cover 200 has two long edge portions and two short edge portions, and the shell 100 is rectangular cuboid-shaped. When the end cover 200 and the shell 100 are welded using the welding device 500, the welding device 500 includes a conveying mechanism 570, and the conveying mechanism 570 is sequentially provided with an assembling station 510, a first welding station 520, a first trimming station 530, a transfer station 540, a second welding station 550, and a second trimming station 560 in a conveying direction (as shown in FIG. 7).

During welding, first, the end cover 200, the electrode assembly 600, and the shell 100 are assembled at the assembling station 510, so that the end cover 200 covers the opening of the shell 100 and is fixed in a first clamp with the end cover 200 facing downward, and the first clamp is capable of exposing a long edge portion of the end cover 200 to facilitate the welding of the long edge portion. Thereafter, the conveying mechanism 570 moves the first clamp as well as the shell 100 and the end cover 200 fixed in the first clamp to the first welding station 520.

Then, the two welding heads 400 respectively weld the two long edge portions from opposite sides of the end cover 200, and the two welding heads 400 have opposite moving directions, where the welding head 400 located on a rear side moves from left to right to obtain the first welding seam 310 located on the rear side, a left end of the first welding seam 310 is the start end 3101, and a right end is the terminal end 3102. The welding head 400 located on a front side moves from right to left to obtain the first welding seam 310 located on the front side, a left end of the first welding seam 310 is the terminal end 3102, and the right end is the start end 3101.

Afterwards, the conveying mechanism 570 continuously drives the first clamp, the end cover 200, and the shell 100 to move to the first trimming station 530. After the first trimming station 530 trims the first welding seam 310 on the long edge portion, the conveying mechanism 570 continuously drives the first clamp, the end cover 200, and the shell 100 to move to the transfer station 540.

Afterwards, at the transfer station 540, the end cover 200 and the shell 100 are moved into a second clamp so that two short edge portions of the end cover 200 are exposed, thereby facilitating welding at the short edge portions.

Afterwards, the conveying mechanism 570 continuously drives the second clamp, the shell 100, and the end cover 200 to move to the second welding station 550. At the second welding station 550, the two welding heads 400 respectively weld the two short edge portions from opposite sides of the end cover 200, and the two welding heads 400 have opposite movement directions. The welding head 400 on the left side moves from back to front to obtain the first welding seam 310 on a left side. A front end of the first welding seam 310 is the start end 3101, and a rear end is the terminal end 3102. The terminal end 3102 of the first welding seam 310 on the left side and the start end 3101 of the first welding seam 310 on the rear side are connected in a laminated manner at the corner 220 on the left rear side of the end cover 200. The start end 3101 of the first welding seam 310 on the left side and the terminal end 3102 of the first welding seam 310 on the front side are connected in a laminated manner at the corner 220 on the left front side of the end cover 200. The welding head 400 on the right side moves from back to front, thereby obtaining the first welding seam 310 on a right side, a front end of the freest welding seam 310 is the terminal end 3102, and a rear end is the start end 3101. The start end 3101 of the first welding seam 310 located on the right side and the terminal end 3102 of the first welding seam 310 located on the rear side are connected in a laminated manner at the corner 220 of the right rear side of the end cover 200. The terminal end 3102 of the first welding seam 310 located on the right side and the start end 3101 of the first welding seam 310 located on the front side are connected in a laminated manner at the corner 220 of the right front side of the end cover 200. In this way, the moving directions of the four welding heads 400 surround to form a clockwise rotating ring (specifically, refer to directions pointed by hollow arrows surrounding outside the welding structure 300 in FIG. 6), and the four corners of the end cover 200, i.e., the four corners 220, are all connected by the start end 3101 and the terminal end 3102 of the first welding seam 310 in a laminated manner, which can reduce the problem of poor welding such as insufficient molten pool 330 caused by the welding of two adjacent first welding seams 310 ending at the same corner 220 of the end cover 200. The end cover 200 and the shell 100 have a desirable welding quality and a good welding structure strength at the corner 220 of the end cover 200.

After the welding is finally completed, the conveying mechanism 570 moves the second clamp, the shell 100, and the end cover 200 to the second trimming station 560 for trimming, thereby completing the welding of the end cover 200 and the shell 100 of the battery cell 20.

Of course, in other embodiments, the moving directions of the four welding heads 400 surround to form a counterclockwise rotating ring, which can be specifically set according to actual needs.

It should be noted here that, as shown in FIG. 6 and FIG. 10, the moving direction of the welding head 400 (the welding direction of the welding seam) can also be determined according to the shape of the welding seam. The welding seam is in the shape of fish scales, and the welding seam is composed of several crescent-shaped structures laminated in the moving direction of the welding head 400, and an opening direction of the crescent-shaped structure may be the moving direction of the welding head 400. In other words, the welding direction of the welding seam can be determined according to the opening direction of the crescent-shaped structure on the welding seam, and then the start end and the terminal end of the welding seam can be determined according to the welding direction of the welding seam. The welding head 400 may be a laser welding head, an electric welding head, and the like. The specific welding method may be selected according to actual needs and is not limited here.

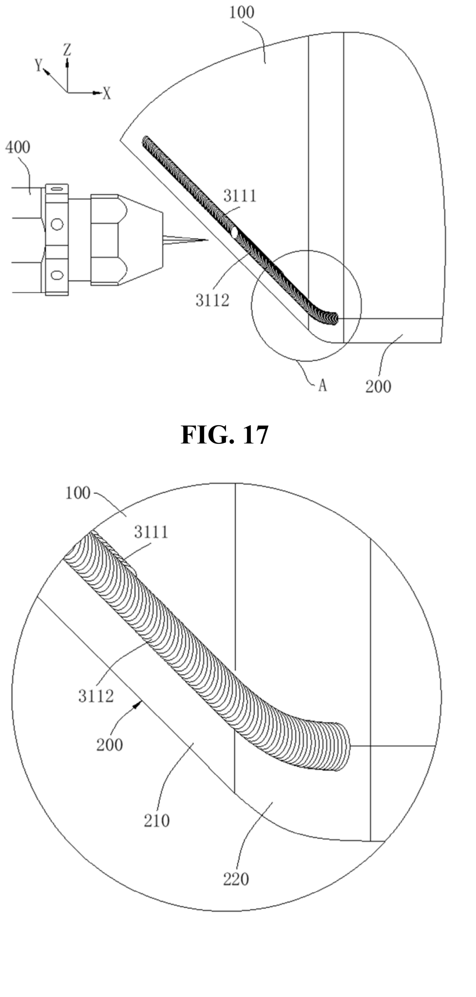

In another embodiment of the present application, as shown in FIG. 13, FIG. 17, and FIG. 18, at least one first welding seam 310 of the provided battery cell 20 includes a first welding seam sub-segment 3111 and a second welding seam sub-segment 3112, the first welding seam sub-segment 3111 and the second welding seam sub-segment 3112 are connected, and the first welding seam sub-segment 3111 and the second welding seam sub-segment 3112 are distributed in the length direction of the edge portion 210 corresponding to the end cover 200.

The first welding seam sub-segment 3111 refers to a welding seam structure of a segment extending in the length direction of the edge portion 210 of the end cover 200.

The second welding seam sub-segment 3112 refers to a welding seam structure of another segment extending in the length direction of the edge portion 210 of the end cover 200. It should be noted here that the welding direction of the first welding seam sub-segment 3111 may be the same as or opposite to the welding direction of the second welding seam sub-segment 3112.

The first welding seam sub-segment 3111 and the second welding seam sub-segment 3112 are connected. It is understandable that the first welding seam 310 formed by the first welding seam sub-segment 3111 and the second welding seam sub-segment 3112 is consecutive without being disconnected, so as to achieve a sealed connection between the shell 100 and the end cover 200.

As for at least one first welding seam 310, for example, for a battery cell 20, the first welding seam 310 at the at least one edge portion 210 of the end cover 200 adopts a structural form in which the first welding seam sub-segment 3111 and the second welding seam sub-segment 3112 are connected, which may specifically be two edge portions 210, three edge portions 210, or more than four edge portions 210.

In the battery cell 20 of the embodiment of the present application, the first welding seam 310 includes the first welding seam sub-segment 3111 and the second welding seam sub-segment 3112. Therefore, in the actual manufacturing process, the first welding seam sub-segment 3111 and the second welding seam sub-segment 3112 can be welded in two steps to obtain the first welding seam 310, so that the welding operation of the shell 100 and the end cover 200 is simpler and more convenient.

In another embodiment of the present application, as shown in FIG. 13, FIG. 17, and FIG. 18, the first welding seam sub-segment 3111 and the second welding seam sub-segment 3112 of the provided battery cell 20 are connected at end portions that are relatively close to each other in a laminated manner.

The first welding seam sub-segment 3111 and the second welding seam sub-segment 3112 are connected in a laminated manner at the end portions that are relatively close to each other. It is understandable that the welding seam at the connection between the first welding seam sub-segment 3111 and the second welding seam sub-segment 3112 is arranged in a laminated manner, that is, the connection between the first welding seam sub-segment 3111 and the second welding seam sub-segment 3112 will be welded at least twice, which can increase the welding strength at the connection between the first welding seam sub-segment 3111 and the second welding seam sub-segment 3112, reduce welding defects, improve the welding quality between the end cover 200 and the shell 100, and improve the reliability of the battery cell 20.

In another embodiment of the present application, as shown in FIG. 13, FIG. 17, and FIG. 18, a length of the first welding seam sub-segment 3111 of the provided battery cell 20 is greater than a lamination length of two adjacent first welding seams 310, and a length of the second welding seam sub-segment 3112 is greater than the lamination length of two adjacent first welding seams 310. The lamination length of two adjacent first welding seams 310 may refer to a length of a segment of the welding seam where two adjacent first welding seams 310 overlap, or may refer to a length of the welding seam at the corner 220 of the end cover 200.

The length of the first welding seam sub-segment 3111 is greater than the lamination length of two adjacent first welding seams 310. It is understandable that the first welding seam sub-segment 3111 is capable of completely covering the corner 220 of the end cover 200 and is capable of being led out from the corner 220 of the end cover 200. This can reduce the connection between the first welding seam sub-segment 3111 and the second welding seam sub-segment 3112 at the corner 220 of the end cover 200, thereby improving the welding strength and welding quality at the corner 220 of the end cover 200.

The length of the second welding seam sub-segment 3112 is greater than the lamination length of two adjacent first welding seams 310. It is understandable that the second welding seam sub-segment 3112 is capable of completely covering the corner 220 of the end cover 200 and is capable of being led out from the corner 220 of the end cover 200. This can reduce the connection between the first welding seam sub-segment 3111 and the second welding seam sub-segment 3112 at the corner 220 of the end cover 200, thereby improving the welding strength and welding quality at the corner 220 of the end cover 200.

The battery cell 20 of the embodiments of the present application can effectively improve the welding strength and the welding quality at the corner 220 of the end cover 200.

In another embodiment of the present application, as shown in FIG. 13, FIG. 17, and FIG. 18, the terminal end of the first welding seam sub-segment 3111 and the terminal end of the second welding seam sub-segment 3112 of the provided battery cell 20 are connected in a laminated manner.

The terminal end of the first welding seam sub-segment 3111 is connected to the terminal end of the second welding seam sub-segment 3112 in a laminated manner. It is understandable that the welding end position of the first welding seam sub-segment 3111 and the welding end position of the second welding seam sub-segment 3112 are both located at the connection between the first welding seam sub-segment 3111 and the second welding seam sub-segment 3112, so that the welding start position of the first welding seam sub-segment 3111 and the welding start position of the second welding seam sub-segment 3112 can be respectively located at two adjacent corners 220 of the end cover 200, that is, the start end of the first welding seam sub-segment 3111 and the start end of the second welding seam sub-segment 3112 are located at the corners 220 of the end cover 200, so that the problem of poor welding such as insufficient molten pool 330 caused by the welding of two adjacent first welding seams 310 ending at the same corner 220 of the end cover 200 can be reduced, and the end cover 200 and the shell 100 have good welding quality and good welding structure strength at the corner 220 of the end cover 200.

In another embodiment of the present application, as shown in FIG. 13, FIG. 17, and FIG. 18, for the provided battery cell 20, in a width direction of the first welding seam sub-segment 3111, end portions of the first welding seam sub-segment 3111 and the second welding seam sub-segment 3112 that are relatively close to each other are partially connected in a laminated manner.

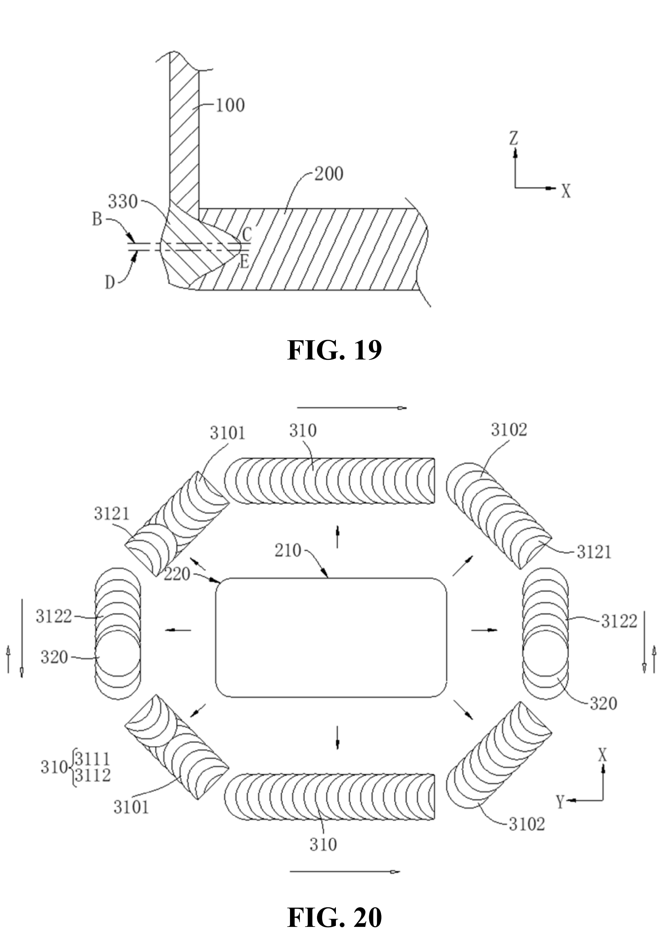

In the width direction of the first welding seam sub-segment 3111, end portions of the first welding seam sub-segment 3111 and the second welding seam sub-segment 3112 that are relatively close to each other are partially connected in a laminated manner. It is understandable that, as shown in FIG. 19, in the welding process, due to processing errors, center lines of the welding heads 400 when welding the edge portions 210 of the end cover 200 are not on the same horizontal plane, so that the center line B of the formed first welding seam sub-segment 3111 and the center line D of the second welding seam sub-segment 3112 are also not on the same horizontal plane, thereby causing the first welding seam sub-segment 3111 and the second welding seam sub-segment 3112 to be misaligned vertically, so that the adjacent first welding seam sub-segments 3111 and the second welding seam sub-segments 3112 do not completely overlap, but partially overlap. In addition, the partial overlapping coverage increases the welding region between the end cover 200 and the shell 100, and improves the welding reliability.

In one embodiment, as shown in FIG. 13 to FIG. 16, the end cover 200 is rectangular, the end cover 200 includes two long edge portions and two short edge portions, and the shell 100 is rectangular cuboid-shaped. When the end cover 200 and the shell 100 are welded using the welding device 500, the welding device 500 includes a conveying mechanism 570, and the conveying mechanism 570 is sequentially provided with an assembling station 510, a first welding station 520, a first trimming station 530, a transfer station 540, a second welding station 550, and a second trimming station 560 in a conveying direction.

During welding, first, the end cover 200, the electrode assembly 600, and the shell 100 are assembled at the assembling station 510, so that the end cover 200 covers the opening of the shell 100 and is fixed in a first clamp with the end cover 200 facing downward, and the first clamp is capable of exposing a long edge portion of the end cover 200 to facilitate the welding of the long edge portion.

Thereafter, the conveying mechanism 570 moves the first clamp as well as the shell 100 and the end cover 200 fixed in the first clamp to the first welding station 520. Then, the two welding heads 400 respectively weld the two long edge portions from the opposite sides of the end cover 200, and the moving directions of the two welding heads 400 are the same. Both welding heads 400 move from left to right (specifically in conjunction with the directions indicated by the hollow arrows on the front and rear sides in FIG. 13), thereby obtaining the first welding seam 310 located on the front side and the first welding seam 310 located on the rear side, the left end of the first welding seam 310 located on the front side and the left end of the first welding seam 310 located on the rear side are both start ends 3101, and the right end of the first welding seam 310 located on the front side and the right end of the first welding seam 310 located on the rear side are both terminal ends 3102.

Afterwards, the conveying mechanism 570 continuously drives the first clamp, the end cover 200, and the shell 100 to move to the first trimming station 530. After the first trimming station 530 trims the first welding seam 310 on the long edge portion, the conveying mechanism 570 continuously drives the first clamp, the end cover 200, and the shell 100 to move to the transfer station 540.

Afterwards, at the transfer station 540, the end cover 200 and the shell 100 are moved into a second clamp, and the second clamp is capable of exposing two short edge portions of the end cover 200, thereby facilitating welding at the short edge portions.

Afterwards, the conveying mechanism 570 continuously drives the second clamp as well as the shell 100 and the end cover 200 to move to the second welding station 550. At the second welding station 550, the two welding heads 400 respectively weld the two short edge portions from the opposite sides of the end cover 200, and the moving directions of the two welding heads 400 are the same (specifically, the directions indicated by the hollow arrows set on the left and right sides and close to the end cover 200 in FIG. 13). The two welding heads 400 both move a certain distance from back to front and then stop welding. At this time, the short edge portions of the end cover 200 are partially welded, thereby obtaining a first welding seam sub-segment 3111 on the left side and a first welding seam sub-segment 3111 on the right side. Then, the two welding heads 400 continuously move forward, and when they move to the front side of the end cover, the two welding heads 400 receive instructions to start welding, and at the same time, the two welding heads 400 move in the opposite direction from front to back (specifically in conjunction with the directions indicated by the hollow arrows set on the left and right sides and away from the end cover 200 in FIG. 13), thereby obtaining a second welding seam sub-segment 3112 on the left side and a second welding seam sub-segment 3112 on the rear side, thus completing the welding of the short edge portions of the end cover 200. Moreover, the start end (i.e., the rear end) of the first welding seam sub-segment 3111 on the left side and the start end 3101 of the first welding seam 310 on the rear side are connected in a laminated manner at the corner 220 on the left rear side of the end cover 200. The terminal end of the first welding seam sub-segment 3111 on the left side is connected to the terminal end of the second welding seam sub-segment 3112 on the left edge portion in a laminated manner in the middle of the left side of the end cover 200. The start end (i.e., the front end) of the second welding seam sub-segment 3112 on the left side is connected to the start end 3101 of the first welding seam 310 on the front side in a laminated manner at the corner 220 of the left front side of the end cover 200. The start end (i.e., the rear end) of the first welding seam sub-segment 3111 on the right side is connected to the terminal end 3102 of the first welding seam 310 on the left side in a laminated manner at the corner 220 of the right rear side of the end cover 200. The terminal end of the first welding seam sub-segment 3111 on the right side is connected to the terminal end of the second welding seam sub-segment 3112 on the right side in a laminated manner in the middle of the right edge portion of the end cover 200. The start end (i.e., the front end) of the second welding seam sub-segment 3112 on the right side is connected to the terminal end 3102 of the first welding seam 310 on the front side in a laminated manner at the right front corner 220 of the end cover 200. This can reduce the lamination of the terminal end 3102 of the first welding seam 310 on the front side and the terminal end 3102 of the first welding seam 310 on the right side at the right front corner 220 of the end cover 200, and reduce the problem of poor welding caused by the lamination of the terminal end 3102, thereby improving the welding quality, and improving the welding strength.

After the welding is finally completed, the conveying mechanism 570 moves the second clamp, the shell 100, and the end cover 200 to the second trimming station 560 for trimming, thereby completing the welding of the end cover 200 and the shell 100 of the battery cell 20.

During the welding process of the left and right edge portions of the end cover 200, the welding head 400 first welds part of the edge portion 210 and then ends the welding in advance. The welding head 400 continues to move forward. During the movement, a preparation time may be provided for a reverse movement of the welding head 400, and a time for the welding head 400 to receive a reverse movement welding operation instruction may also be provided, thereby improving the welding efficiency of the end cover 200 and the shell 100.

In another embodiment of the present application, as shown in FIG. 20, the welding structure 300 of the provided battery cell 20 also includes at least one second welding seam 320, and the second welding seam 320 extends from the terminal end 3102 of the first welding seam 310 toward the start end 3101 of the first welding seam 310 and covers the first welding seam 310.

The second welding seam 320 refers to a welding seam structure covering the first welding seam 310. The welding structure 300 may be understood as a welding seam structure formed by performing another welding on the basis of the first welding seam 310. The welding seam structure is the second welding seam 320.

The second welding seam 320 extends from the terminal end 3102 of the first welding seam 310 toward the start end 3101 of the first welding seam 310 and covers the first welding seam 310. It is understandable that the second welding seam 320 covers the terminal end 3102 of the first welding seam 310. In this way, performing another welding at the terminal end 3102 of the first welding seam 310 can alleviate the poor welding problems such as insufficient molten pool 330 at the terminal end 3102 of the first welding seam 310, thereby improving the welding quality and welding structure strength at the corner 220 of the end cover 200.

In another embodiment of the present application, as shown in FIG. 20, the start end of the second welding seam 320 of the provided battery cell 20 covers the terminal end 3102 of the first welding seam 310.

The start end of the second welding seam 320 refers to a segment of welding seam formed at the beginning of backwelding the edge portion 210 of the end cover 200 in an opposite direction.

The start end of the second welding seam 320 covers the terminal end 3102 of the first welding seam 310. It is understandable that during welding, the welding head 400 can be moved in a predetermined direction to the corner 220 of the end cover 200 to form the first welding seam 310, and then the welding head 400 moves in an opposite direction for a distance to perform welding, so as to obtain the second welding seam 320. At this time, at the corner 220 of the end cover 200, the welding material at the start end of the second welding seam 320 can be accumulated to fill the molten pool 330 of the terminal end 3102 of the first welding seam 310, thereby further improving the welding quality and welding structure strength at the corner 220 of the end cover 200.

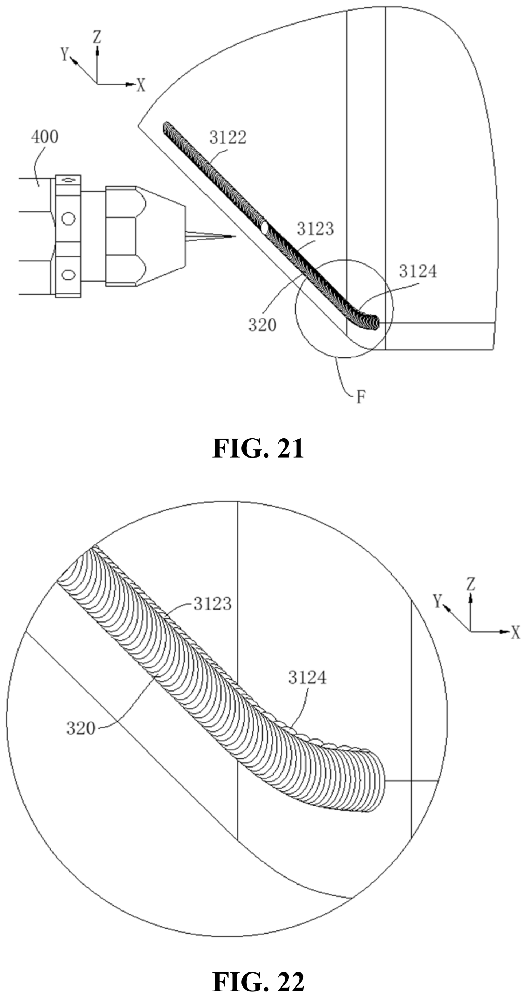

In another embodiment of the present application, as shown in FIG. 20, FIG. 21, and FIG. 22, for the provided battery cell 20, the second welding seam 320 partially covers the first welding seam 310 in the width direction of the first welding seam 310.

In the width direction of the first welding seam 310, the second welding seam 320 partially covers the first welding seam 310; and it is understandable that in the welding process, due to processing errors, center lines of the welding heads 400 when welding the edge portions 210 of the end cover 200 are not on the same horizontal plane, so that a center line of the formed first welding seam 310 and a center line of the second welding seam 320 are also not on the same horizontal plane, thereby causing the first welding seam 310 and the second welding seam 320 to be misaligned vertically, so that the adjacent first welding seam 310 and the second welding seam 320 do not completely overlap, but partially overlap. In addition, the partial overlapping coverage increases the welding region between the end cover 200 and the shell 100, and improves the welding reliability.

In another embodiment of the present application, as shown in FIG. 20, FIG. 21, and FIG. 22, at least one pair of oppositely disposed first welding seams 310 of the provided battery cell 20 is covered by the second welding seams 320.

At least one pair of oppositely arranged first welding seams 310 is covered by the second welding seams 320. It is understandable that when the two welding heads 400 respectively weld the opposite edge portions 210 of the end cover 200, the two welding heads 400 perform welding in the same direction to obtain two oppositely arranged first welding seams 310, and then simultaneously move in the opposite direction for a distance to obtain a pair of second welding seams 320. In this way, the two welding heads 400 are simultaneously controlled to move synchronously in the same direction, and the welding is easy to achieve, which is convenient for processing and manufacturing.

At least one pair of first welding seams 310 is oppositely arranged. It is understandable that in a battery cell 20, there are one, two, three, or more pairs of oppositely arranged first welding seams 310 covered by second welding seams 320. For example, as shown in FIG. 13, there is one pair of oppositely arranged first welding seams 310 covered by the second welding seams 320. The specific distribution can be determined according to the shape of the end cover 200 and the welding path, and is not limited here.

In another embodiment of the present application, as shown in FIG. 20, for the provided battery cell 20, in two adjacent first welding seams 310, the terminal end 3102 of one first welding seam 310 and the terminal end 3102 of the other first welding seam 310 are arranged in a laminated manner, and the terminal end 3102 of at least one first welding seam 310 is covered by the start end 3101 of the second welding seam 320.

In two adjacent first welding seams 310, the terminal end 3102 of one first welding seam 310 and the terminal end 3102 of the other first welding seam 310 are arranged in a laminated manner. It is understandable that the welding of the two adjacent first welding seams 310 ends at the same corner 220. Such production may result in poor welding problems such as insufficient molten pool 330 at the corner 220; but the terminal end 3102 of at least one first welding seam 310 is covered by the start end 3101 of the second welding seam 320, so that backwelding may be performed along the corresponding first welding seam 310 at the corner 220, so that the second welding seam 320 is used to fill the molten pool 330 at the corner 220, so as to overcome the poor welding problems such as insufficient molten pool 330 and improve the strength of the welding structure and the welding quality.

The terminal end 3102 of at least one first welding seam 310 is covered by the start end of the second welding seam 320. It is understandable that the terminal ends 3102 of two first welding seams 310 may be covered by the start end of the second welding seam 320, or the terminal end 3102 of one of the first welding seams 310 may be covered by the start end of the second welding seam 320. The specific selection can be made according to actual needs and is not limited here.

In another embodiment of the present application, the length of the second welding seam 320 of the provided battery cell 20 is greater than the lamination length of two adjacent first welding seams 310.

In the battery cell 20 of the embodiment of the present application, the length of the second welding seam 320 is greater than the lamination length of two adjacent first welding seams 310, so that the second welding seam 320 is capable of completely covering the corner 220 of the end cover 200 and is capable of being led out from the corner 200 of the end cover 200, thereby effectively improving the welding structure strength and welding quality at the corner 220 of the end cover 200.

In another embodiment of the present application, the length of the first welding seam 310 of the provided battery cell 20 is greater than the length of the second welding seam 320.

In the battery cell 20 of the embodiment of the present application, the length of the first welding seam 310 is greater than the length of the second welding seam 320, so that the second welding seam 320 covers a partial region of the first welding seam 310. The welding length is moderate, which is conducive to improving the production efficiency and reducing welding costs.

In another embodiment of the present application, as shown in FIG. 20, FIG. 21, and FIG. 22, the first welding seam 310 of the provided battery cell 20 includes a first corner segment 3121, a first connecting segment 3122, a second connecting segment 3123, and a second corner segment 3124 connected in sequence, the first corner segment 3121 and the second corner segment 3124 are respectively located at two adjacent corners 220 of the end cover 200, and the second welding seam 320 covers the second connecting segment 3123 and the second corner segment 3124; where the depth of the molten pool 330 of the welding structure 300 on the second corner segment 3124 is greater than the depth of the molten pool 330 of the welding structure 300 at the second connecting segment 3123, and the depth of the molten pool 330 of the welding structure 300 at the second connection is greater than the depth of the molten pool 330 of the welding structure 300 at the first connecting segment 3122.

The first corner segment 3121 refers to a segment of the first welding seam 310 located at one corner 220 of the two adjacent corners 220 of the end cover 200. For example, as shown in FIG. 20, the first corner segment 3121 refers to a segment of the first welding seam 310 on the left side located at the left rear corner 220 of the end cover 200, or refers to a segment of the first welding seam 310 on the right side located at the right rear corner 220 of the end cover 200. The first corner segment 3121 is the start end 3101 of the first welding seam 310.

The second corner segment 3124 refers to a segment of the first welding seam 310 located at the other corner 220 of the two adjacent corners 220 of the end cover 200, and the segment is covered by the second welding seam 320. For example, as shown in FIG. 20, FIG. 21, and FIG. 22, the first corner segment 3121 refers to a segment of the first welding seam 310 on the left side located at the front and rear corners 220 of the end cover 200, and the second corner segment 3124 is the terminal end 3102 of the first welding seam 310.

The second connecting segment 3123 refers to a segment of the first welding seam 310 located between the first corner segment 3121 and the second corner segment 3124, and the segment is partly covered by the second welding seam 320. For example, as shown in FIG. 20, FIG. 21, and FIG. 22, the second connecting segment 3123 refers to a segment of the first welding seam 310 on the left side, which is located in the middle and covered by the second welding seam 320.

The first connecting segment 3122 refers to a segment of the first welding seam 310 between the first corner segment 3121 and the second corner segment 3124, and the segment does not have a portion covered by the second welding seam 320. For example, as shown in FIG. 20, FIG. 21, and FIG. 22, the first connecting segment 3122 refers to a segment of the first welding seam 310 on the left side located in the middle and is not covered by the second welding seam 320.

The depth of the molten pool 330 of the welding structure 300 at the second corner segment 3124 is greater than the depth of the molten pool 330 of the welding structure 300 at the second connecting segment 3123, and the depth of the molten pool 330 of the welding structure 300 at the second connection is greater than the depth of the molten pool 330 of the welding structure 300 at the first connecting segment 3122. It is understandable that the depth of the molten pool 330 of the welding structure 300 at the second corner segment 3124 is deep, and the welding reliability is good, so that the welding structure strength at the corner 220 of the end cover 200 is better. In addition, the depth of the molten pool 330 of the welding structure 300 at the second connection is greater than the depth of the molten pool 330 of the welding structure 300 at the first connecting segment 3122, and the depth of the molten pool 330 of the welding structure 300 at the corner 220 close to the end cover 200 is deep, and the welding reliability is good, so that the corner 220 close to the end cover 200 also has good welding strength, which is conducive to improving the welding reliability between the end cover 200 and the shell 100. In addition, the welding structure 300 has one more first welding seam 310 at the second corner segment 3124 than at the second connecting segment 3123. The more welding seams there are, the deeper the depth of the molten pool 330 is. Therefore, the depth of the molten pool 330 of the welding structure 300 at the second corner segment 3124 is greater than the depth of the molten pool 330 of the welding structure 300 at the second connecting segment 3123. The welding structure 300 has one more second welding seam 320 at the second connecting segment 3123 than at the first connecting segment 3122. The more welding seams there are, the deeper the depth of the molten pool 330 is. Therefore, the depth of the molten pool 330 of the welding structure 300 at the second connecting segment 3123 is greater than the depth of the molten pool 330 of the welding structure 300 at the first connecting segment 3122.

In another embodiment of the present application, a lowest point E of the molten pool 330 of the second welding seam 320 of the provided battery cell 20 is located inside the end cover 200.

The lowest point of the molten pool 330 of the second welding seam 320 refers to the lowest point E of the molten pool 330 in its depth direction. For example, as shown in FIG. 19, the depth direction of the molten pool 330 may be the X direction.

In the battery cell 20 of the embodiments of the present application, when welding is performed from a side surface of the end cover 200, the lowest point of the molten pool 330 of the second welding seam 320 is located inside the end cover 200, so that the shell 100 will not be burnt through during welding to cause leakage, and a good sealing performance is achieved after the welding between the shell 100 and the end cover 200, thereby improving the reliability of the battery cell 20.

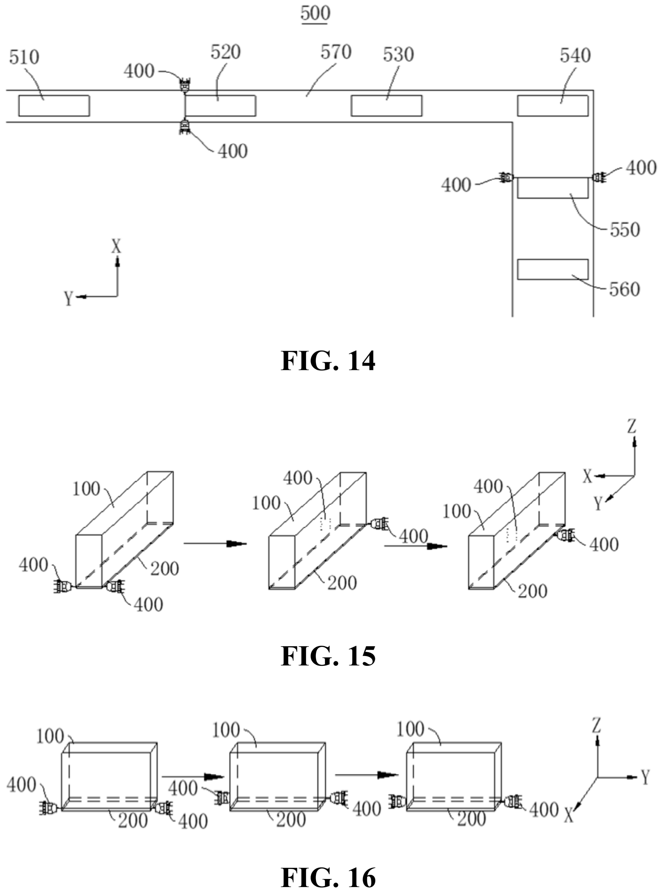

In one embodiment, as shown in FIG. 14, FIG. 15, FIG. 16, and FIG. 20, the end cover 200 is rectangular, the end cover 200 includes two long edge portions and two short edge portions, and the shell 100 is rectangular cuboid-shaped. When the end cover 200 and the shell 100 are welded using the welding device 500, the welding device 500 includes a conveying mechanism 570, and the conveying mechanism 570 is sequentially provided with an assembling station 510, a first welding station 520, a first trimming station 530, a transfer station 540, a second welding station 550, and a second trimming station 560 in a conveying direction.

During welding, first, the end cover 200, the electrode assembly 600, and the shell 100 are assembled at the assembling station 510, so that the end cover 200 covers the opening of the shell 100 and is fixed in a first clamp with the end cover 200 facing downward, and the first clamp is capable of exposing a long edge portion of the end cover 200 to facilitate the welding of the long edge portion.

Thereafter, the conveying mechanism 570 moves the first clamp as well as the shell 100 and the end cover 200 fixed in the first clamp to the first welding station 520. Then, the two welding heads 400 respectively weld the two long edge portions from the opposite sides of the end cover 200, and the moving directions of the two welding heads 400 are the same. Both welding heads 400 move from left to right (specifically in conjunction with the directions indicated by the hollow arrows on the front and rear sides in FIG. 20) to completely weld the long edge portions of the end cover 200, thereby obtaining the first welding seam 310 located on the front side and the first welding seam 310 located on the rear side, the left end of the first welding seam 310 located on the front side and the left end of the first welding seam 310 located on the rear side are both start ends 3101, and the right end of the first welding seam 310 located on the front side and the right end of the first welding seam 310 located on the rear side are both terminal ends 3102.

Afterwards, the conveying mechanism 570 continuously drives the first clamp, the end cover 200, and the shell 100 to move to the first trimming station 530. After the first trimming station 530 trims the first welding seam 310 on the long edge portion, the conveying mechanism 570 continuously drives the first clamp, the end cover 200, and the shell 100 to move to the transfer station 540.

Afterwards, at the transfer station 540, the end cover 200 and the shell 100 are moved into a second clamp so that two short edge portions of the end cover 200 are exposed, thereby facilitating welding at the short edge portions.

Afterwards, the conveying mechanism 570 continuously drives the second clamp as well as the shell 100 and the end cover 200 to move to the second welding station 550. At the second welding station 550, the two welding heads 400 respectively weld the two short edge portions from the opposite sides of the end cover 200, and the moving directions of the two welding heads 400 are the same (specifically, the directions indicated by the hollow arrows set on the left and right sides and close to the end cover 200 in FIG. 20). Both weldings move from back to front and completely weld the two short edge portions, thereby obtaining the first welding seam 310 on the left side and the first welding seam 310 on the back side. The rear end of the first welding seam 310 on the left side and the rear end of the first welding seam 310 on the rear side are both start ends 3101, and the rear end of the first welding seam 310 on the left side and the rear end of the first welding seam 310 on the rear side are both terminal ends 3102. At this time, the start end 3102 (i.e., the first corner segment 3121) of the first welding seam 310 on the left side and the start end 3101 of the first welding seam 310 on the rear side are connected in a laminated manner at the left rear corner 220 of the end cover 200, and the terminal end 3102 (i.e., the second corner segment 3124) of the first welding seam 310 on the left side and the start end 3101 of the first welding seam 310 on the front side are connected in a laminated manner at the left front corner 220 of the end cover 200. The start end 3102 (i.e., the first corner segment 3121) of the first welding seam 310 and the terminal end 3102 of the first welding seam 310 on the rear side are connected in a laminated manner at the right rear corner 220 of the end cover 200, and the terminal end 3102 (i.e., the second corner segment 3124) of the first welding seam 310 on the right side and the terminal end 3102 of the first welding seam 310 on the front side are connected in a laminated manner at the right front corner 220 of the end cover 200. In order to alleviate the problem of poor welding caused by the lamination of the terminal ends 3102, the two welding heads 400 for welding the short edge portions move reversely from front to back, thereby forming two second welding seams 320 at the two short edge portions of the end cover 200. The start end of the second welding seam 320 on the left side covers the terminal end 3102 (i.e., the second corner segment 3124) of the first welding seam 310 on the left side and the second connecting segment 3123. At the same time, the start end of the second welding seam 320 on the right side covers the terminal end 3102 (i.e., the second corner segment 3124) of the first welding seam 310 on the right side and the second connecting segment 3123, thereby alleviating the problem of poor welding at the right front corner 220 of the end cover 200, improving the welding quality, and improving the welding strength.

After the welding is finally completed, the conveying mechanism 570 moves the second clamp, the shell 100, and the end cover 200 to the second trimming station 560 for trimming, thereby completing the welding of the end cover 200 and the shell 100 of the battery cell 20. In the welding process, the two welding heads 400 move in the same direction, and the movement control of the welding heads 400 is simple and easy to implement.

In another embodiment of the present application, as shown in FIG. 10, FIG. 17, and FIG. 21, the welding structure 300 of the provided battery cell 20 is located on a side surface of the end cover 200.

The welding structure 300 is located on the side surface of the end cover 200. It is understandable that the end cover 200 and the shell 100 are welded by side welding, so that the welding head 400 performs welding on a front side surface, a rear side surface, a left side surface, and a right side surface of the end cover 200. This welding method is simple, convenient, and easy to implement. Of course, in other embodiments, top welding may be used between the end surface and the shell 100, that is, the welding structure 300 is located on a top surface of the end cover 200.

In another embodiment of the present application, as shown in FIG. 6, FIG. 13, and FIG. 20, the corner 220 of the end cover 200 of the provided battery cell 20 is arc-shaped.

The corner 220 of the end cover 200 is arc-shaped. It is understandable that a position of the shell 100 corresponding to the corner 220 of the end cover 200 is also arc-shaped, so that the transition of the edges of the battery cell 20 is smoother and the battery cell 20 is more reliable in use. In addition, the corner 220 of the end cover 200 is arc-shaped, and therefore, during welding, in a process of the welding head 400 moving linearly along one edge portion 210 of the end cover 200 for welding, the corner 220 is capable of being welded. At the same time, in a process of the welding head 400 moving linearly along an edge portion 210 of the end cover 200 adjacent to the edge portion 210 for welding, the corner 220 is capable of being welded again, so that two adjacent first welding seams 310 are arranged in a laminated manner at the corner 220. In addition, the moving path of the welding head 400 is simple, which is also conducive to improving the welding efficiency.

In another embodiment, the corner 220 of the end cover 200 is in a circular arc shape, an elliptical arc shape, or the like.

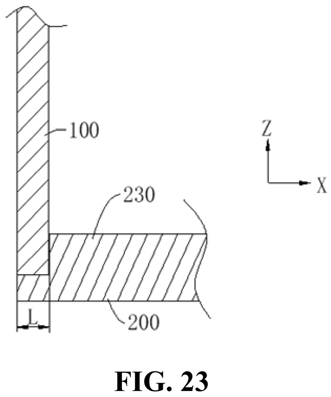

In another embodiment of the present application, as shown in FIG. 23, the end cover 200 of provided the battery cell 20 is constructed to have a protruding portion 230, and the protruding portion 230 is inserted into the shell 100 from the opening.

The protruding portion 230 refers to a protruding structure constructed on the end cover 200 toward an inner surface of the shell 100, and the protruding structure is capable of being inserted into the shell 100. Through the limiting effect between the outer peripheral wall of the protruding portion 230 and the inner wall of the shell 100, the end cover 200 is capable of being stably fixed on the shell 100, thereby improving the subsequent welding accuracy. In addition, in laser welding, the protruding portion 230 can also block the laser emitted by the welding head 400, thereby reducing the risk of laser leakage.

In another embodiment of the present application, a gap L between an outer peripheral wall of the protruding portion 230 of the provided battery cell 20 and an outer peripheral wall of the end cover 200 is in a range of 0.1 mm to 0.5 mm.

In the battery cell 20 of the embodiment of the present application, the gap L between the outer peripheral wall of the protruding portion 230 and the outer peripheral wall of the end cover 200 is set within the above-mentioned range, so that the shell 100 and the end cover 200 are capable of being stably and reliably welded together, and the welding structure has good strength. If the gap L is set too small, the shell 100 may protrude too much outside the end cover 200 and cause poor welding; and if the gap L is set too large, the edge of the end cover 200 may protrude too much outside the shell 100 and cause poor welding. The gap L can be 0.1 mm, 0.12 mm, 0.14 mm, 0.16 mm, 0.18 mm, 0.2 mm, 0.22 mm, .24 mm, 0.26 mm, 0.28 mm, 0.3 mm, 0.32 mm, 0.34 mm, 0.36 mm, 0.38 mm, 0.4 mm, 0.42 mm, 0.44 mm, 0.46 mm, 0.48 mm, or 0.5 mm.

In another embodiment of the present application, a battery is provided, including the above battery cell 20.

The battery of the embodiment of the present application adopts the above battery cell 20. The welding structure between the shell 100 and the end cover 200 in the battery cell 20 has a good strength, the battery cell 20 has good reliability in use, and the battery has better reliability in use and performance. As the battery of the embodiment of the present application adopts all technical solutions of all above embodiments, all beneficial effects brought by the technical solutions of the above embodiments are likewise achieved, which will not be repeated here.

In another embodiment of the present application, an electrical apparatus is provided, including the above battery.

The electrical apparatus of the embodiments of the present application adopts the above battery, the battery has good reliability in use and performance, and it is also conducive to improving the performance and reliability in use of the electrical apparatus. As the electrical apparatus of the embodiment of the present application adopts all technical solutions of all above embodiments, all beneficial effects brought by the technical solutions of the above embodiments are likewise achieved, which will not be repeated herein.

The above descriptions are merely preferred embodiments of the present application, and are not intended to limit the present application. Any modification, equivalent replacement, and improvement made within the spirit and principle of the present application shall fall within the protection scope of the present application.

## Claims

1. A battery cell, comprising:
a shell having an opening;
an end cover, wherein the end cover is welded at the opening to form a welding structure, the welding structure comprises a plurality of first welding seams, the first welding seams are arranged corresponding to edge portions of the end cover, and the plurality of first welding seams are connected to form a closed annular structure to be arranged surrounding the end cover;
wherein two adjacent first welding seams are connected at a corresponding corner of the end cover in a laminated manner.

2. The battery cell according to claim 1, wherein in a width direction of the first welding seams, two adjacent first welding seams partially overlap at the corner of the end cover.

3. The battery cell according to any one of claims 1 to 2, wherein in two adjacent first welding seams, a start end of one first welding seam is connected to a terminal end of the other first welding seam in a laminated manner.

4. The battery cell according to any one of claims 1 to 3, wherein a lowest point of a molten pool of the first welding seam is located inside the end cover.

5. The battery cell according to any one of claims 1 to 4, wherein a depth of the molten pool of the welding structure at the corner of the end cover is greater than a depth of the molten pool of the welding structure at another position.

6. The battery cell according to any one of claims 1 to 5, wherein at least one first welding seam comprises a first welding seam sub-segment and a second welding seam sub-segment connected to each other, and the first welding seam sub-segment and the second welding seam sub-segment are distributed in a length direction of the corresponding edge portion of the end cover.

7. The battery cell according to claim 6, wherein the first welding seam sub-segment and the second welding seam sub-segment are connected at end portions relatively close to each other in a laminated manner.

8. The battery cell according to claim 7, wherein a length of the first welding seam sub-segment is greater than a lamination length of two adjacent first welding seams, and a length of the second welding seam sub-segment is greater than the lamination length of two adjacent first welding seams.

9. The battery cell according to claim 8, wherein a terminal end of the first welding seam sub-segment is connected to a terminal end of the second welding seam sub-segment in a laminated manner.

10. The battery cell according to any one of claims 7 to 9, wherein in a width direction of the first welding seam sub-segment, the first welding seam sub-segment and the second welding seam sub-segment are partially connected at end portions relatively close to each other in a laminated manner.

11. The battery cell according to any one of claims 1 to 2 or 4 to 8, wherein the welding structure further comprises at least one second welding seam, and the second welding seam extends from a terminal end of the first welding seam toward a start end of the first welding seam and covers the first welding seam.

12. The battery cell according to claim 11, wherein a start end of the second welding seam covers the terminal end of the first welding seam.

13. The battery cell according to any one of claims 11 to 12, wherein in the width direction of the first welding seam, the second welding seam partially covers the first welding seam.

14. The battery cell according to any one of claims 11 to 13, wherein at least one pair of oppositely arranged first welding seams is covered by the second welding seam.

15. The battery cell according to any one of claims 11 to 14, wherein in two adjacent first welding seams, the terminal end of one first welding seam and the terminal end of the other first welding seam are arranged in a laminated manner, and the terminal end of at least one of the first welding seams is covered by the start end of the second welding seam.

16. The battery cell according to any one of claims 11 to 15, wherein a length of the second welding seam is greater than the lamination length of two adjacent first welding seams.

17. The battery cell according to any one of claims 11 to 16, wherein a length of the first welding seam is greater than the length of the second welding seam.

18. The battery cell according to any one of claims 11 to 17, wherein the first welding seam comprises a first corner segment, a first connecting segment, a second connecting segment, and a second corner segment connected in sequence, the first corner segment and the second corner segment are respectively located at two adjacent corners of the end cover, and the second welding seam covers the second connecting segment and the second corner segment;
wherein the depth of the molten pool of the welding structure on the second corner segment is greater than the depth of the molten pool of the welding structure at the second connecting segment, and the depth of the molten pool of the welding structure at the second connection is greater than the depth of the molten pool of the welding structure at the first connecting segment.

19. The battery cell according to any one of claims 11 to 18, wherein a lowest point of the molten pool of the second welding seam is located inside the end cover.

20. The battery cell according to any one of claims 1 to 19, wherein the welding structure is located at a side surface of the end cover.

21. The battery cell according to any one of claims 1 to 20, wherein the corner of the end cover is arc-shaped.

22. The battery cell according to any one of claims 1 to 21, wherein the end cover is constructed to have a protruding portion, and the protruding portion is inserted into the shell from the opening.

23. The battery cell according to claim 22, wherein a gap between an outer peripheral wall of the protruding portion and an outer peripheral wall of the end cover is in a range from 0.1 mm to 0.5 mm.

24. A battery, comprising the battery cell according to any one of claims 1 to 23.

25. An electrical apparatus, comprising the battery according to claim 24.
